# EUROPÄISCHE PATENTSCHRIFT

(11) **EP 1 958 899 B1**
(45) Veröffentlichungstag und Bekanntmachung des Hinweises auf die Patenterteilung: **21.08.2013**
(21) Anmeldenummer: 07405048.5
(22) Anmeldetag: 16.02.2007
(51) Int. Cl.: B65G 53/28, B05B 7/14

(54) **Vorrichtung zum Fördern von Fluid**
Device for transporting fluids
Dispositif d'alimentation de fluide

(43) Veröffentlichungstag der Anmeldung: 20.08.2008
(73) Patentinhaber: J. Wagner AG, 9450 Altstätten (CH)
(72) Erfinder: Rieger, Timo, 71563 Affalterbach (DE); Schrade, Daniel, 78462 Konstanz (DE)
(74) Vertreter: Nückel, Thomas

(56) Entgegenhaltungen:
- EP-A1- 1 106 547
- WO-A-89/11431
- US-B1- 6 287 056

## Beschreibung

### Technisches Gebiet

Um Gegenstände oder Werkstücke mit Beschichtungspulver zu beschichten, wird das Beschichtungspulver oder kurz Pulver aus einem Pulvervorratsbehälter mit Hilfe einer Pulverfördervorrichtung zu einer Pulversprühpistole transportiert und dort mit der Pulversprühpistole auf das Werkstück aufgebracht.

Die Erfindung betrifft eine Vorrichtung zum Fördern von Fluid, welches beispielsweise Pulver zum Beschichten von Werkstückoberflächen sein kann. Zudem betrifft die Erfindung ein Verfahren zum Betreiben der erfindungsgemäßen Fördervorrichtung.

### Stand der Technik

Aus der Druckschrift DE 2032 1762 U sowie EP 1 427 536 B1 ist eine Vorrichtung zum Fördern von Pulver bekannt. Die Fördervorrichtung umfasst eine erste Förderkammer und eine parallel dazu angeordnete zweite Förderkammer, wobei jede der Förderkammern eine Zuführleitung und eine Austragsleitung für das zu befördernde Pulver aufweist. Die beiden Austragsleitungen sind ausgangsseitig miteinander verbunden. Während über die Zuführleitung in die erste Förderkammer Pulver gesaugt wird, wird das bereits aus einem früheren Arbeitstakt in der zweiten Förderkammer befindliche Pulver über die Austragsleitung abtransportiert. Anschließend wird das in die erste Förderkammer geförderte Pulver aus der Förderkammer abtransportiert, während in die zweite Förderkammer frisches Pulver aus dem Pulvervorratsbehälter gesaugt wird. Die erste Förderkammer bildet zusammen mit einer Antriebeinheit und einem Kolben eine erste Pumpe. Die zweite Förderkammer bildet zusammen mit einer zweiten Antriebseinheit und einem zweiten Kolben eine zweite Pumpe. Beide Pumpen arbeiten zeitlich versetzt, aber synchron zueinander. Auf diese Weise kann ein Pulsieren im zur Sprühpistole strömenden Pulverstrom reduziert werden. Allerdings sind dazu wie beschrieben zwei Pumpen nötig, was zu einem erhöhten Platzbedarf und einer aufwändigeren Bauweise führt. Zudem sind eine Reihe von bewegten mechanischen Teilen erforderlich, so dass der Verschleiß und die Störanfälligkeit der Fördervorrichtung nicht unerheblich ist.

Aus dem Stand der Technik DE 103 00 280 A1 ist eine Pulverfördervorrichtung, welche auch als Pumpeneinrichtung für Pulver bezeichnet wird, bekannt. Diese Pumpeneinrichtung umfasst zwei mechanisch synchronisierte Membranpumpen, die abwechselnd das Beschichtungspulver fördern. Jede der beiden Membranpumpen weist ein Einlassventil, eine Dosierkammer und ein Auslassventil auf. Wenn das Einlassventil geöffnet ist und in der Dosierkammer mit Hilfe einer scheibenförmigen Membran ein Unterdruck erzeugt wird, wird Pulver in die Dosierkammer gesaugt. Anschließend wird das Einlassventil geschlossen und mit Hilfe von Druckluft, die in die Dosierkammer geblasen wird, das Beschichtungspulver aus der Dosierkammer über das nun geöffnete Auslassventil aus der Dosierkammer ausgeblasen. Die Bewegung der Membranen der beiden Membranpumpen erfolgt über eine Kolbenstange, die die beiden Membranen miteinander verbindet. Dadurch wird, wenn in der ersten Dosierkammer das Kammervolumen mit Hilfe der Membran vergrößert wird, das Kammervolumen in der zweiten Dosierkammer automatisch verkleinert. Eine derartige Fördervorrichtung für Pulver ist aufwendig herzustellen. Zudem ist ein erheblicher Aufwand für die Steuerung des Antriebs, das heißt der Kolbenstange erforderlich. Allein zur Erfassung der Position der Kolbenstange sind vier Sensoren erforderlich. Ein weiterer Nachteil besteht darin, dass die Fördervorrichtung bei einem Farbwechsel aufwändiq zu reinigen ist.

Schließlich ist aus der Druckschrift WO 89/11431 eine Vorrichtung zum Dosieren und Fördern von verschiedenen Materialien wie zum Beispiel Pulver, Granulat oder Flocken bekannt. Die Vorrichtung umfasst eine Förderkammer, die eingangsseitig ein Einlassventil und ausgangsseitig ein Auslassventil aufweist. Zudem ist eine Unterdruckquelle vorgesehen, deren Saugkanal mit der Förderkammer verbunden ist. Mittels einer Druckluftquelle, die ebenfalls mit der Förderkammer verbunden ist, kann Druckluft in die Förderkammer geblasen werden, um das zu fördernde Material aus der Förderkammer herauszublasen.

### Darstellung der Erfindung

Eine Aufgabe der Erfindung ist es, eine Vorrichtung zum Fördern von Fluid anzugeben, die einfach herstellbar ist, mit möglichst wenigen bewegten Teilen auskommt, die ein ausreichend hohes Saugvermögen aufweist und die störungsfrei betreibbar ist. Zudem soll die Fördervorrichtung weitestgehend verschleißfrei arbeiten.

Vorteilhafter Weise ist die Vorrichtung zum Fördern von Fluid mit Luft einfach und automatisch zu reinigen.

Eine weitere Aufgabe der Erfindung isL es, ein Verfähren zum Betreiben der erfindungsgemäßen Vorrichtung zum Fördern von Fluid anzugeben.

Die Aufgabe wird durch eine Vorrichtung zum Fördern von Fluid mit den Merkmalen gemäß Patentanspruch 1 gelöst. Die erfindungsgemäße Vorrichtung zum Fördern von Fluid weist eine Förderkammer, ein Einlassventil, welches in Strömungsrichtung vor der Förderkammer angeordnet ist, und ein Auslassventil, welches in Strömungsrichtung hinter der Förderkammer angeordnet ist, auf. Zudem ist ein Injektor vorgesehen, dessen Saugkanal mit der Förderkammer verbunden ist. Über einen Luftkanal, der ebenfalls mit der Förderkammer verbunden ist, kann Ausblasluft in die Förderkammer geblasen werden.

Beim erfindungsgemäßen Verfahren zum Betreiben der Vorrichtung zum Fördern von Fluid wird in einer Phase das Einlassventil geöffnet, das Auslassventil geschlossen und der Injektor mit Treibdüsenluft versorgt. In einer weiteren Phase wird das Einlassventil geschlossen, das Auslassventil geöffnet und in die Förderkammer Ausblasluft geblasen.

Vorteilhafte Weiterbildungen der Erfindung ergeben sich aus den in den abhängigen Patentansprüchen angegebenen Merkmalen.

Bei einer Ausführungsform der erfindungsgemäßen Vorrichtung zum Fördern von Fluid ist der Auslass des Injektors mit dem Auslass des Auslassventils verbunden.

Bei einer weiteren Ausführungsform der erfindungsgemäßen Vorrichtung zum Fördern von Fluid ist ein Druckluftkanal für Dosierluft vorgesehen, der mit dem Auslass des Auslassventils verbunden ist. Dadurch kann im Bedarfsfall dem Pulverstrom zusätzliche Luft beigemengt werden.

Bei einer anderen Ausführungsform der erfindungsgemäßen Vorrichtung zum Fördern von Fluid ist vorgesehen, dass der Luftkanal für die Ausblasluft im Eingangsbereich der Förderkammer in die Förderkammer mündet. Dies hat den Vorteil, dass das in der Förderkammer befindliche Pulver mit wenig Luft heraustransportiert werden kann. Dadurch erhöht sich die Effizienz und die erforderliche Menge an Ausblasluft wird reduziert.

Darüber hinaus kann bei der erfindungsgemäßen Vorrichtung zum Fördern von Fluid der Luftkanal für die Ausblasluft eine Strömungsbarriere für das zu fördernde Fluid aufweisen. Auf diese Weise wird erreicht, dass das zu fördernde Fluid nicht in den Luftkanal gelangt.

Zur Lösung der Aufgabe wird ferner vorgeschlagen, dass bei der erfindungsgemäßen Vorrichtung zum Fördern von Fluid ein Einsatz vorgesehen ist, um das Volumen der Förderkammer zu vergrößern. Dadurch kann die Förderkammer und damit die gesamte Fördervorrichtung einfach und kostengünstig an unterschiedliche Anforderungen angepasst werden.

Vorteilhafterweise sind bei der erfindungsgemäßen Vorrichtung zur Förderung von Fluid das Einlassventil und/oder das Auslassventil als mit Druckluft betreibbare Quetschventile ausgebildet.

Bei einer weiteren Ausführungsform der erfindungsgemäßen Vorrichtung zum Fördern von Fluid ist der Saugkanal des Injektors im Auslassbereich der Förderkammer mit der Förderkammer verbunden.

Zudem ist es von Vorteil, wenn der Saugkanal des Injektors bei der erfindungsgemäßen Vorrichtung zum Fördern von Fluid in einem spitzen Winkel auf die Förderkammer trifft.

Vorteilhafterweise weist bei der erfindungsgemäßen Vorrichtung zum Fördern von Fluid der Injektor eine Treibdüse auf, die über einen Anschluss mit Treibdüsenluft versorgbar ist.

Bei einer Weiterbildung der erfindungsgemäßen Vorrichtung zum Fördern von Fluid sind die Steueranschlüsse des Einlassventils und des Auslassventils, der Anschluss für die Dosierluft, der Anschluss für die Treibdüsenluft und der Anschluss für die Ausblasluft auf der einen oder beiden Stirnseiten der Fördervorrichtung angeordnet. Auf diese Weise können mehrere Fördervorrichtungen parallel nebeneinander bei minimalem Platzbedarf angeordnet werden.

Vorteilhafterweise ist bei der erfindungsgemäßen Vorrichtung zum Fördern von Fluid ein Rückschlagventil vorgesehen, das mit dem Dosierluftkanal verbunden ist.

Zudem wird ein System zum Fördern von Fluid mit der erfindungsgemäßen Fördervorrichtung vorgeschlagen. Das System umfasst ein Steuerventil für die Dosierluft, ein Steuerventil für die Ausblasluft, ein Steuerventil für die Treibdüsenluft und eine Steuerung zum Steuern des Einlassventils, des Auslassventils und der Steuerventile.

Bei einer Weiterbildung des erfindungsgemäßen Verfahrens zum Betreiben der Fördervorrichtung wird mittels der Steuerung die Gesamtluftmenge, welche die Ausblasluft, die Treibdüsenluft und die Dosierluft umfasst, konstant gehalten.

Schließlich kann die erfindungsgemäße Vorrichtung zum Fördern von Fluid verwendet werden, um Beschichtungspulver für die Beschichtung von Werkstückoberflächen zu fördern.

### Kurze Beschreibung der Zeichnungen

Im Folgenden wird die Erfindung mit mehreren Ausführungsbeispielen anhand von fünf Figuren weiter erläutert.
- Figur 1: zeigt eine mögliche Ausführungsform der erfindungsgemäßen Vorrichtung zum Fördern von Fluid im Querschnitt.
- Figur 2: zeigt ein Blockschaltbild einer ersten Ausführungsform des Fördersystems in einem ersten Betriebszustand.
- Figur 3: zeigt ein Blockschaltbild der ersten Ausführungsform des Fördersystems in einem zweiten Betriebszustand.
- Figur 4: zeigt ein Blockschaltbild einer zweiten Ausführungsform des Fördersystems in einem ersten Betriebszustand.
- Figur 5: zeigt ein Blockschaltbild der zweiten Ausführungsform des Fördersystems in einem zweiten Betriebszustand.

### Wege zur Ausführung der Erfindung

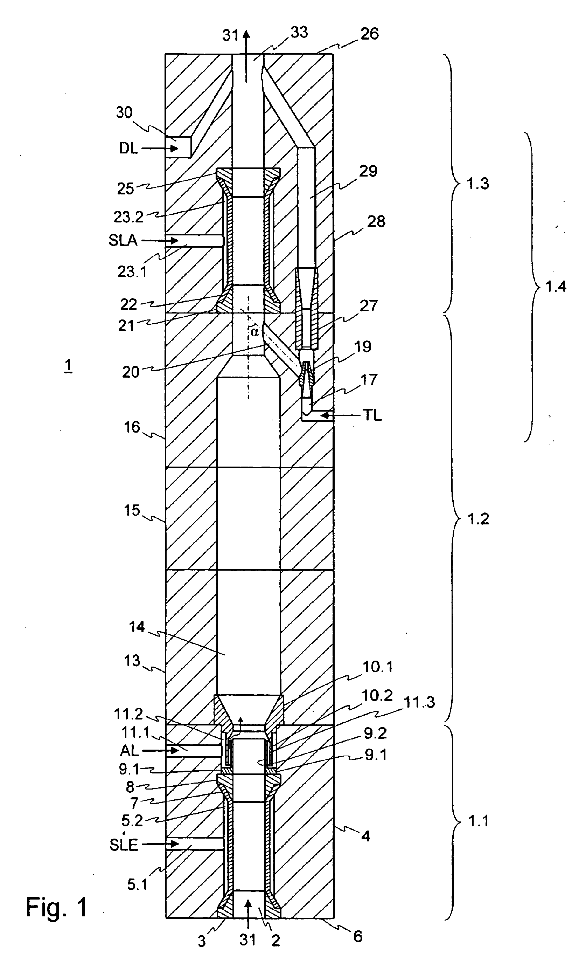

In Figur 1 ist eine mögliche Ausführungsform der erfindungsgemäßen Vorrichtung zum Fördern von Fluid im Querschnitt gezeigt. Im Folgenden wird mit der Vorrichtung Beschichtungspulver gefördert. Die Fördervorrichtung wird daher auch als Pulverförderer 1 bezeichnet. Der Pulverförderer 1 umfasst im Wesentlichen vier Komponenten, nämlich ein Einlassventil 1.1, eine in Strömungsrichtung 31 dahinter angeordnete Fördereinheit 1.2, ein hinter der Fördereinheit 1.2 angeordnetes Auslassventil 1.3 und einen Injektor 1.4, der parallel zum Auslassventil 1.3 angeordnet ist. Auf der stromaufwärtigen Stirnseite 6 des Pulverförderers 1 befindet sich eine Ansaugöffnung, durch die Pulver in einen Ansaugkanal 2 gesaugt werden kann.

Das Einlassventil 1.1 umfasst ein Einlassventilgehäuse 4, in dem mittels eines ersten Konusses 3 und eines zweiten Konusses 8 ein Ventilschlauch 7 gehalten wird. Zwischen dem Gehäuse 4 und der äußeren Mantelfläche des Ventilschlauchs 7 befindet sich eine Druckluftkammer 5.2, die über einen Druckluftkanal 5.1 mit Druckluft beaufschlagbar ist. Diese Druckluft im Folgenden als Steuerluft SLE für das Einlassventil 1.1 bezeichnet. Im entspannten Zustand befindet sich der Ventilschlauch 7 in der in Figur 1 gezeigten Stellung. Das Einlassventil 1.1 ist geöffnet und das Pulver kann durch den Ansaugkanal 2 strömen. Wird die Druckluftkammer 5.2 über den Druckluftkanal 5.1 mit der Steuerluft SLE beaufschlagt, verformt sich der Ventilschlauch 7, so dass der Ansaugkanal 2 im Querschnitt verjüngt wird. Ist der Druck der Steuerluft SLE groß genug, verschließt der Ventilschlauch 7 den Ansaugkanal 2, so dass kein Pulver mehr in die Pulverkammer 14 strömen kann.

Bei der in Figur 1 gezeigten Ausführungsform umfasst die Fördereinheit 1.2 ein erstes Gehäuseteil 13, ein zweites Gehäuseteil 15, welches im Folgenden auch als Einsatz bezeichnet wird, und ein drittes Gehäuseteil 16. Die drei Gehäuseteile 13, 15 und 16 bilden die Förderkammer 14. Stattdessen ist es aber auch möglich, die Förderkammer 14 aus zwei Gehäuseteilen oder auch aus nur einem Gehäuseteil zu fertigen. Das Gehäuseteil 15 ist optional und kann zwischen die beiden Gehäuseteile 13 und 16 gesetzt werden, um das Volumen der Förderkammer 14 an die gewünschten technischen Anforderungen anpassen zu können. Die Förderkammer 14 ist im Wesentlichen rohrförmig ausgebildet und verjüngt sich im stromabwärtigen Bereich. Dies ist technisch jedoch nicht zwingend erforderlich. Es ist auch denkbar, dass die Förderkammer 14 über die gesamte Länge einen gleich bleibenden Querschnitt aufweist. Der Querschnitt der Förderkammer 14 kann rechteckig sein. Vorzugsweise ist er jedoch rund ausgebildet.

Stromabwärts befindet sich hinter der Fördereinheit 1.2 das Auslassventil 1.3. Das Auslassventil 1.3 ist in funktioneller Hinsicht genauso wie das Einlassventil 1.1 aufgebaut. Ein Ventilschlauch 22 wird im Gehäuse 28 des Auslassventils 1.3 zwischen einem ersten Konus 21 und einem zweiten Konus 25 gehalten. Über einen Druckluftkanal 23.1 kann eine Druckluftkammer 23.2 mit Druckluft, welche im Folgenden als Steuerluft SLA für das Auslassventil 1.3 bezeichnet wird, beaufschlagt werden.

Der Injektor 1.4 ist über einen Pulveransaugkanal 20 mit der Förderkammer 14 verbunden. Der Injektor 1.4 umfasst eine Treibdüse 19, die über einen Druckluftkanal 17 mit Treibdüsenluft TL versorgt werden kann. Dadurch, dass aus der Treibdüse 19 Treibdüsenluft (TL) strömt, entsteht im Ansaugkanal 20 ein Unterdruck. Der Injektor 1.4 arbeitet nach dem Venturi-Prinzip. Stromabwärts befindet sich hinter der Treibdüse 19 eine Fangdüse 27, gefolgt von einem Auslasskanal 29, der wiederum in den Pulverkanal 33 mündet. Mit Hilfe des Injektors 1.4 ist es möglich, in der Förderkammer 14 einen Unterdruck zu erzeugen. Der Ansaugkanal 20 trifft in einem Winkel α auf die Förderkammer 14. Der Winkel α ist vorzugsweise ein spitzer Winkel.

Im Gehäuse 28 befindet sich zudem ein Druckluftkanal 30, welcher in den Pulverkanal 33 mündet. Über den Druckluftkanal 30 kann so genannte Dosierluft DL in den Pulverkanal 33 eingespeist werden. Die Menge der einzuspeisenden Dosierluft DL hängt von der gewünschten Gesamtluftmenge Soll_{ges} ab. Als Gesamtluftmenge wird hier die Summe aus Dosierluft DL, Treibdüsenluft TL und Ausblasluft AL bezeichnet.

Im Gehäuse 4 befindet sich ein Kanal 11.1, welcher über einen zweiten Kanal 11.2 und einen Kanal 11.3 mit der Förderkammer 14 verbunden ist. Der Kanal 11.3 ist vorzugsweise als Strömungsbarriere ausgebildet, um zu verhindern, dass Pulver in die Kanäle 11.2 und 11.1 gelangt. Die Strömungsbarriere kann als Drossel oder als Blende ausgebildet sein. Um das in der Förderkammer 14 befindliche Pulver aus der Kammer 14 herauszutransportieren, wird Ausblasluft AL über die Kanäle 11.1, 11.2 und 11.3 in die Förderkammer 14 geblasen.

Bei der in Figur 1 gezeigten Ausführungsform des Pulverförderers 1 befinden sich die Anschlüsse für die Steuerluft SLE, die Ausblasluft AL, die Steuerluft SLA und die Dosierluft DL sowie der Anschluss für die Treibdüsenluft TL auf den Längsseiten der Fördervorrichtung 1. Für den Fall, dass mehrere Pulverförderer 1 unmittelbar nebeneinander angeordnet werden sollen, ist es möglich, diese Anschlüsse auf die beiden Stirnseiten 6 und 26 des Pulverförderers 1 zu verlegen.

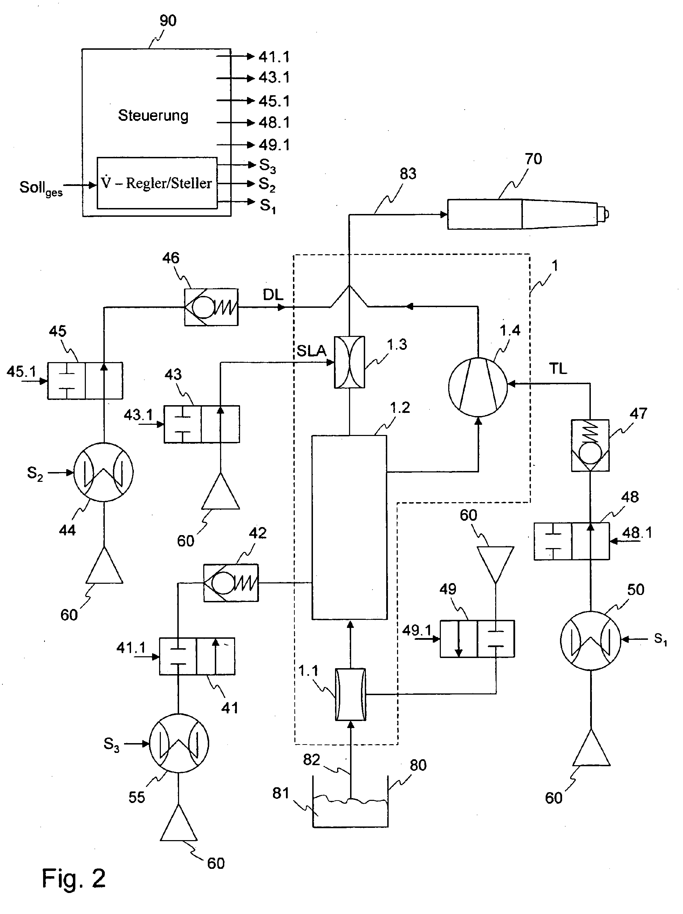

In Figur 2 ist ein Blockschaltbild für ein Pulverfördersystem mit dem Pulverförderer 1 in einem ersten Betriebszustand gezeigt. In diesem Betriebszustand ist das Einlassventil 1.1 geöffnet. Das Einlassventil 1.1 wird über ein Steuerventil 49 gesteuert. Ist das Steuerventil 49, wie in Figur 2 gezeigt, geschlossen, wird der Steueranschluss 49.1 des Einlassventils 1.1 nicht mit Steuerdruckluft SLE beaufschlagt. Das Steuerventil 41 für die Ausblasluft AL ist ebenfalls geschlossen, so dass keine Ausblasluft AL in die Förderkammer 14 der Fördereinheit 1.2 gelangt. Das Steuerventil 43 hingegen ist geöffnet, so dass die Druckluftkammer 23.2 des Auslassventils 1.3 mit Steuerluft SLA beaufschlagt und das Auslassventil 1.3 geschlossen ist. Das Steuerventil 48 ist geöffnet, so dass der Injektor 1.4 mit Treibdüsenluft TL beaufschlagt wird. Dadurch entsteht in der Förderkammer 14 der Fördereinheit 1.2 ein Unterdruck. Das Steuerventil 45 für die Dosierluft DL ist geöffnet. Somit strömt durch die Schlauchleitung 83, welche den Pulverförderer 1 mit einer Beschichtungspistole 70 verbindet, sowohl Dosierluft DL als auch Treibdüsenluft TL. Mit den Bezugszeichen 46, 42 und 47 sind Rückschlagventile bezeichnet, die verhindern, dass Druckluft in Richtung der Druckluftquellen 60 strömen kann. Zwischen dem Steuerventil 41 und der Druckluftquelle 60 befindet sich ein Druckluftregler 55, zwischen dem Steuerventil 45 und der Druckluftquelle 60 befindet sich ein weiterer Druckluftregler 44 und zwischen dem Steuerventil 48 und der Druckluftquelle 60 befindet sich ein dritter Druckluftregler 50. Die drei Druckluftregler 44, 50 und 55 sowie die Steuerventile 41, 43, 45, 48 und 49 sind mit ihren Steuereingängen S2, S1, S3, 41.1, 43.1, 45.1, 48.1 beziehungsweise 49.1 mit einer Steuerung 90 verbunden. Die Steuerung 90 übernimmt die Steuerung der soeben genannten Ventile und gibt die Sollwerte S1, S2 und S3 für die drei Druckregler 44, 50 und 55 vor. Dazu ist in der Steuerung 90 ein Volumenstromregler vorgesehen, der aus einem gewünschten Wert für den Gesamtluftstrom Soll_{ges} die drei Stellwerte S1, S2 und S3 berechnet und an die drei Druckluftregler 44, 50 und 55 leitet. In diesem ersten Betriebszustand wird Pulver 81 aus dem Pulvervorratsbehälter 80 über die Saugleitung 82 in die Förderkammer 14 gesaugt.

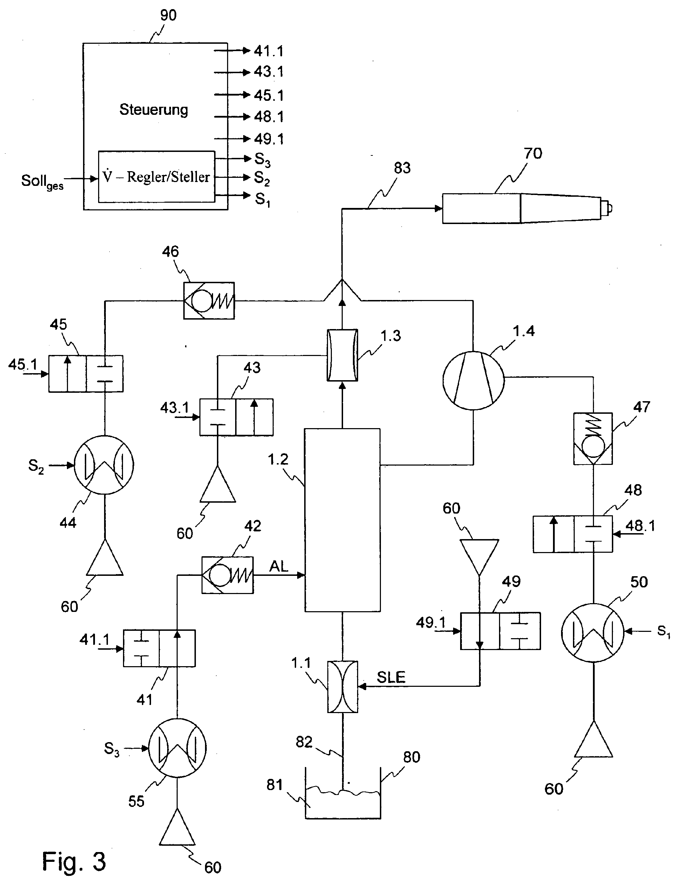

In Figur 3 ist das oben beschriebene Fördersystem in Form eines Blockschaltbildes in einem zweiten Betriebszustand dargestellt. Das Einlassventil 1.1 ist nun geschlossen, so dass kein Pulver mehr aus dem Pulvervorratsbehälter 80 in die Förderkammer 14 der Fördereinheit 1.2 gesaugt werden kann. Hingegen ist das Auslassventil 1.3 nun geöffnet. Das Steuerventil 41 ist ebenfalls geöffnet, so dass von der Druckluftquelle 60 Ausblasluft AL in die Förderkammer 14 der Fördereinheit 1.2 geblasen wird. Das Pulver, das sich in der Förderkammer 14 befindet, wird dadurch über das geöffnete Auslassventil 1.3 in den Pulverschlauch 83 und von dort zur Sprühpistole 70 transportiert. In diesem Betriebszustand ist das Steuerventil 48 geschlossen, so dass keine Treibdüsenluft TL zum Injektor 1.4 gelangt. Auch das Steuerventil 45 ist geschlossen, so dass auch keine Dosierluft DL in den Schlauch 83 gelangt. Nachdem die Förderkammer 14 der Fördereinheit 1.2 ausgeblasen ist, wird in den ersten Betriebszustand gemäß Figur 2 zurückgewechselt. Auf diese Weise kann ein quasi kontinuierlicher Pulverstrom erzeugt werden und die Pistole 70 kontinuierlich mit Pulver versorgt werden.

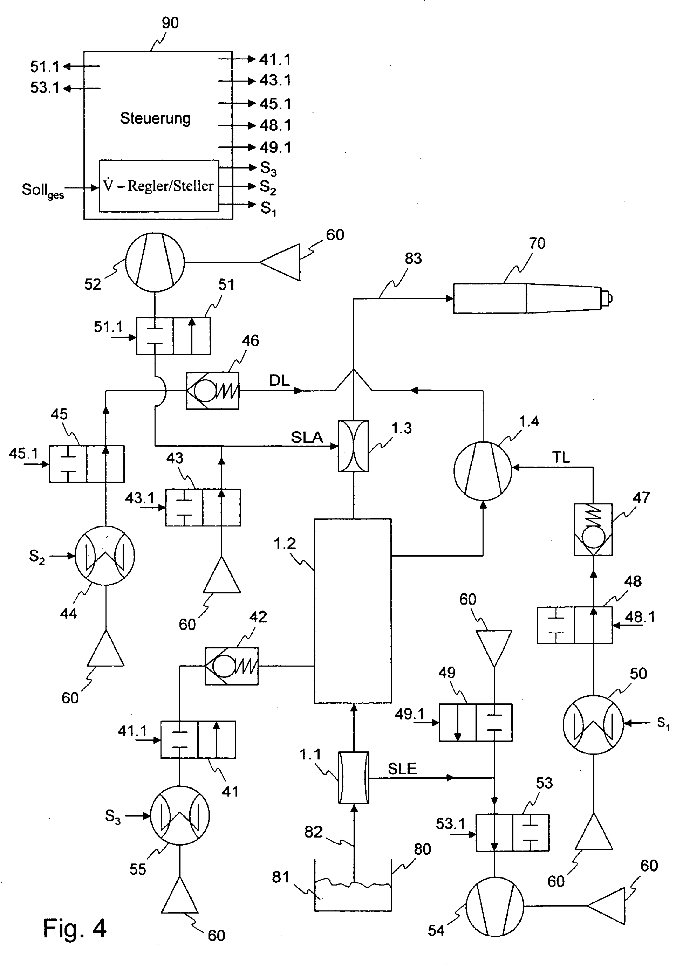

Um die Zeitdauer, die erforderlich ist, um das Einlassventil 1.1 zu öffnen, zu reduzieren, kann, wie in Figur 4 gezeigt, zusätzlich eine Unterdruckquelle vorgesehen sein. Die Unterdruckquelle umfasst einen Vakuumerzeuger 54 und ist an die Druckluftquelle 60 angeschlossen. Soll das Einlassventil 1.1 geöffnet werden, wird zuerst das Steuerventil 49 geschlossen, dann das Steuerventil 53 geöffnet und die in der Druckkammer 5.2 befindliche Luft durch den Vakuumerzeuger 54 abgesaugt.

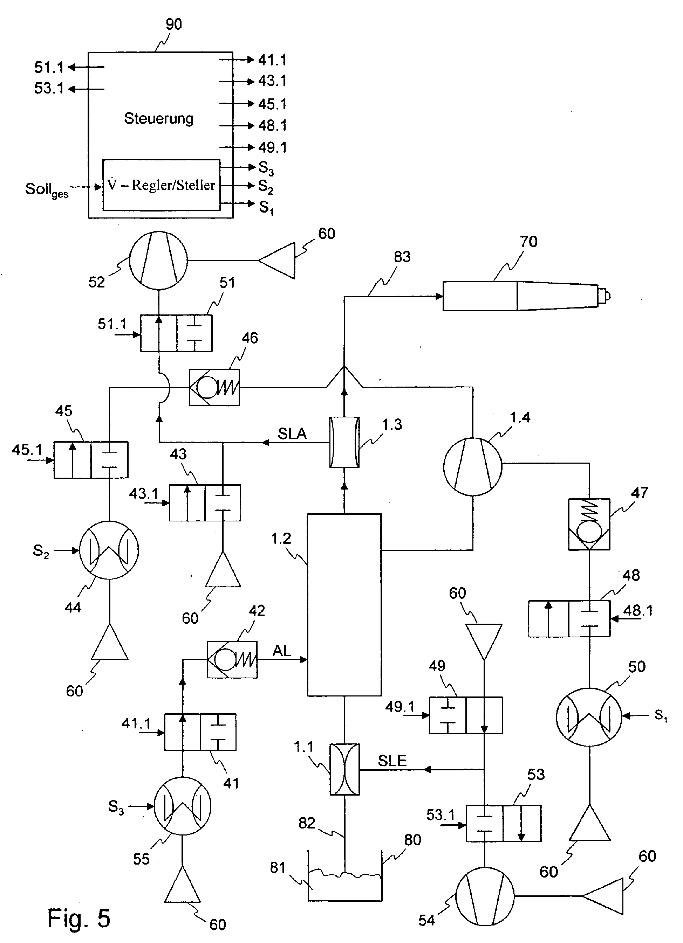

Sinngemäß das gleiche gilt für das Auslassventil 1.3. Um die Zeitdauer, die erforderlich ist, um das Auslassventil 1.3 zu öffnen, zu reduzieren, kann eine Unterdruckquelle vorgesehen sein. Die Unterdruckquelle umfasst einen Vakuumerzeuger 52 und ist an die Druckluftquelle 60 angeschlossen. Soll das Auslassventil 1.3 geöffnet werden, wird zuerst das Steuerventil 43 geschlossen, dann das Steuerventil 51 geöffnet und die in der Druckluftkammer 23.2 befindliche Luft über den Vakuumerzeuger 52 abgesaugt. Dieser Betriebszustand ist in Figur 5 gezeigt. Mit der erfindungsgemäßen Fördervorrichtung kann pulverförmiges Material, wie beispielsweise Beschichtungspulver, Mehl oder Staub gefördert werden.

Vorteilhafter Weise kann die Vorrichtung zum Fördern von / Fluid mit Luft einfach und automatisch gereinigt werden. Dazu wird zuerst das Einlassventil 1.1 geschlossen und das Auslassventil 1.3 geöffnet und dann Ausblasluft AL durch den Ringspalt 11.3 in den Pulverförderer 1 geblasen. Statt dessen kann man zum Reinigen auch die Saugleitung 82 aus dem Pulverbehälter 80 herausnehmen und bei geöffnetem Einlassventil 1.1 und geöffnetem Auslassventil 1.3 eine so genannte Spülluft über die Saugleitung 82 in den Pulverförderer 1 blasen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Pulverförderer
- 1.1: Einlassventil
- 1.2: Fördereinheit
- 1.3: Auslassventil
- 1.4: Injektor
- 2: Ansaugkanal
- 3: Konus
- 4: Einlassventilgehäuse
- 5.1: Druckluftkanal
- 5.2: Druckluftkammer
- 6: stromaufwärtige Stirnseite
- 7: Ventilschlauch
- 8: Konus
- 9.1: Einsatz
- 9.2: Hülse
- 10.1: Konus
- 10.2: Hülse
- 11.1: Druckluftkanalabschnitt
- 11.2: Druckluftkanalabschnitt
- 11.3: Ringspalt
- 13: Förderkammergehäuse
- 14: Förderkammer
- 15: Förderkammergehäuse
- 16: Gehäuse der Förderkammer und des Injektors
- 17: Druckluftkanal
- 19: Treibdüse
- 20: Pulverkanal
- 21: Konus
- 22: Ventilschlauch
- 23.1: Druckluftkanalabschnitt
- 23.2: Druckluftkanalabschnitt
- 25: Konus
- 26: stromabwärtige Stirnseite
- 27: Fangdüse
- 28: Gehäuse für Auslassventil und Injektor
- 29: Pulverkanal
- 30: Druckluftkanal
- 31: Transportrichtung
- 33: Pulverkanal
- 41: Steuerventil
- 41.1: Steueranschluss
- 42: Rückschlagventil
- 43: Steuerventil
- 43.1: Steueranschluss
- 44: Druckluftregler
- 45: Steuerventil
- 45.1: Steueranschluss
- 46: Rückschlagventil
- 47: Rückschlagventil
- 48: Steuerventil
- 48.1: Steueranschluss
- 49: Steuerventil
- 49.1: Steueranschluss
- 50: Druckluftregler
- 51: Steuerventil
- 51.1: Steueranschluss
- 52: Vakuumerzeuger
- 53: Steuerventil
- 53.1: Steueranschluss
- 54: Vakuumerzeuger
- 55: Druckluftregler
- 60: Druckluftquelle
- 70: Pulversprühpistole
- 80: Pulverbehälter
- 81: Pulver
- 82: Saugleitung
- 83: Pulverschlauch
- 90: Steuerung
- SLE: Steuerluft für das Einlassventil
- SLA: Steuerluft für das Auslassventil
- DL: Dosierluft
- TL: Treibdüsenluft
- AL: Ausblasluft
- Soll_{ges}: Sollwert Gesamtluftstrom
- S1: Stellwert
- S2: Stellwert
- S3: Stellwert
- a: Winkel

## Patentansprüche

1. Vorrichtung zum Fördern von Fluid,
- mit einer Förderkammer (14),
- mit einem Einlassventil (1.1), welches in Strömungsrichtung (31) vor der Förderkammer (14) angeordnet ist,
- mit einem Auslassventil (1.3), welches in Strömungsrichtung (31) hinter der Förderkammer (14) angeordnet ist, **gekennzeichnet durch** einen Injektor (1.4) dessen Saugkanal (20) mit der Förderkammer (14) verbunden ist, und dessen Auslass (29) mit dem Auslass (33) des Auslassventils (1.3) verbunden ist, und
- mit einem Luftkanal (11.1, 11.2, 11.3), der mit der Förderkammer (14) verbunden ist, damit Ausblasluft (AL) in die Förderkammer (14) geblasen werden kann.

2. Vorrichtung nach Patentanspruch 1,
mit einem Druckluftkanal (30) für Dosierluft (DL), der mit dem Auslass (33) des Auslassventils (1.3) verbunden ist.

3. Vorrichtung nach Patentanspruch 1 oder 2,
bei der der Luftkanal (11.1, 11.2, 11.3) für die Ausblasluft (AL) im Eingangsbereich der Förderkammer (14) in die Förderkammer (14) mündet.

4. Vorrichtung nach Patentanspruch 3,
bei der der Luftkanal (11.1, 11.2, 11.3) eine Strömungsbarriere (9.2, 10.2) für das zu fördernde Fluid aufweist.

5. Vorrichtung nach einem der Patentansprüche 1 bis 4, bei der ein Einsatz (15) vorgesehen ist, um das Volumen der Förderkammer (14) zu vergrößern.

6. Vorrichtung nach einem der Patentansprüche 1 bis 5, bei der das Einlassventil (1.1) und/oder das Auslassventil (1.3) als mit Druckluft betreibbare Quetschventile ausgebildet sind.

7. Vorrichtung nach einem der Patentansprüche 1 bis 6, bei der der Saugkanal (20) des Injektors (1.4) im Auslassbereich der Förderkammer (14) mit der Förderkammer (14) verbunden ist.

8. Vorrichtung nach einem der Patentansprüche 1 bis 7, bei der der Saugkanal (20) des Injektors (1.4) in einem spitzen Winkel (α) auf die Förderkammer (14) trifft.

9. Vorrichtung nach einem der Patentansprüche 1 bis 8, bei der der Injektor (1.4) eine Treibdüse (17) aufweist, die über einen Anschluss (17) mit Treibdüsenluft (TL) versorgbar ist.

10. Vorrichtung nach einem der Patentansprüche 1 bis 9, bei der die Steueranschlüsse des Einlassventils und Auslassventils (5.1, 23.1), der Anschluss (30) für die Dosierluft (DL), der Anschluss (17) für die Treibdüsenluft (TL) und der Anschluss (11.1) für die Ausblasluft (AL) auf der Stirnseite (6, 26) der Vorrichtung zum Fördern von Fluid angeordnet sind.

11. Vorrichtung nach einem der Patentansprüche 1 bis 9, mit einem Rückschlagventil (46), das mit dem Dosierluftkanal (30) verbunden ist.

12. System zum Fördern von Fluid mit der Vorrichtung nach einem der Patentansprüche 1 bis 11,
- mit einem Steuerventil für die Dosierluft (45),
- mit einem Steuerventil für die Ausblasluft (42),
- mit einem Steuerventil für die Treibdüsenluft (48),
und
- mit einer Steuerung (90) zum Steuern des Einlassventils (1.1), des Auslassventils (1.3) und der Steuerventile (45, 42, 48).

13. Verfahren zum Betreiben der Vorrichtung nach einem der Patentansprüche 1 bis 12,
- bei dem in einer Phase das Einlassventil (1.1) geöffnet, das Auslassventil (1.3) geschlossen und der Injektor (1.4) mit Treibdüsenluft (TL) versorgt wird,
und
- bei dem in einer weiteren Phase das Einlassventil (1.1) geschlossen, das Auslassventil (1.3) geöffnet und in die Förderkammer (14) Ausblasluft (AL) geblasen wird.

14. Verfahren nach einem der Patentansprüche 1 bis 13, bei dem mittels der Steuerung (90) die Gesamtluftmenge, welche die Ausblasluft (AL), die Treibdüsenluft (TL) und die Dosierluft (DL) umfasst, konstant gehalten wird.

15. Verwendung der Vorrichtung zum Fördern von Fluid nach einem der Patentansprüche 1 bis 14, zum Fördern von Beschichtungspulver.

## Claims

1. A device for delivering fluid, comprising:
- a delivery chamber (14),
- an intake valve (1.1), which is disposed upstream of the delivery chamber (14) in the flow direction (31),
- a discharge valve (1.3), which is disposed downstream of the delivery chamber (14) in the flow direction (31),
**characterized by**
- an injector (1.4), the suction channel (20) of which is connected to the delivery chamber (14), and the outlet (29) of which is connected to the outlet (33) of the discharge valve (1.3), and
- an air channel (11.1, 11.2, 11.3), which is connected to the delivery chamber (14) so that blow-out air (AL) can be blown into the delivery chamber (14).

2. The device according to claim 1,
comprising a compressed air channel (30) for metered air (DL), the channel being connected to the outlet (33) of the discharge valve (1.3).

3. The device according to claim 1 or 2,
in which the air channel (11.1, 11.2, 11.3) for the blow-out air (AL) leads into the delivery chamber (14) in the entrance region of the delivery chamber (14).

4. The device according to claim 3,
in which the air channel (11.1, 11.2, 11.3) comprises a flow barrier (9.2, 10.2) for the fluid to be delivered.

5. The device according to any one of claims 1 to 4, in which an insert (15) is provided so as to increase the volume of the delivery chamber (14).

6. The device according to any one of claims 1 to 5, in which the intake valve (1.1) and/or the discharge valve (1.3) are designed as pinch valves that can be operated with compressed air.

7. The device according to any one of claims 1 to 6, in which the suction channel (20) of the injector (1.4) is connected to the delivery chamber (14) in the discharge region of the delivery chamber (14).

8. The device according to any one of claims 1 to 7, in which the suction channel (20) of the injector (1.4) meets with the delivery chamber (14) at an acute angle (α).

9. The device according Lo any one of claims 1 to 8, in which the injector (1.4) comprises a jet nozzle (17), which can be supplied with jet nozzle air (TL) via a port (17).

10. The device according to any one of claims 1 to 9, in which the control ports of the intake valve and discharge valve (5.1, 23.1), the port (30) for the metered air (DL), the port (17) for the jet nozzle air (TL), and the port (11.1) for the blow-out air (AL) are disposed on the end face (6, 26) of the device for delivering fluid.

11. The device according to any one of claims 1 to 9, comprising a check valve (46), which is connected to the metered air channel (30).

12. A system for delivering fluid using the device according to any one of claims 1 to 11, comprising:
- a control valve for the metered air (45);
- a control valve for the blow-out air (42);
- a control valve for the jet nozzle air (48); and
- a control unit (90) for controlling the intake valve (1.1), the discharge valve (1.3) and the control valves (45, 52, 48).

13. A method for operating the device according to any one of claims 1 to 12,
- in which, in one phase, the intake valve (1.1) is opened, the discharge valve (1.3) is closed, and the injector (1.4) is supplied with jet nozzle air (TL); and
- in which, in another phase, the intake valve (1.1) is closed, the discharge valve (1.3) is opened, and blow-out air (AL) is blown into the delivery chamber (14).

14. A method according to any one of claims 1 to 13,
in which the total air volume, which includes the blow-out air (AL), the jet nozzle air (TL) and the metered air (DL), is kept constant by way of the control unit (90).

15. Use of the device for delivering fluid according to any one of clams 1 to 14, for delivering coating powder.

## Revendications

1. Dispositif pour le transport d'un fluide,
- avec une chambre de refoulement (14),
- avec une soupape d'admission (1.1) agencée en amont de la chambre de refoulement (14) dans la direction d'écoulement (31),
- avec une soupape de décharge (1.3) agencée en aval de la chambre de refoulement (14) dans la direction d'écoulement (31),
**caractérisé par**
- un injecteur (1.4), dont le canal d'aspiration (20) est relié à la chambre de refoulement (14) et dont la sortie (29) est reliée à la sortie (33) de la soupape de décharge (1.3), et
- avec un canal d'air (11.1, 11.2, 11.3) relié à la chambre de refoulement (14) pour pouvoir souffler l'air à évacuer (AL) dans la chambre de refoulement (14).

2. Dispositif selon la revendication 1,
avec un canal d'air comprimé (30) pour l'air de dosage (DL), lequel est relié à la sortie (33) de la soupape de décharge (1.3).

3. Dispositif selon la revendication 1 ou 2,
dans lequel le canal d'air (11.1, 11.2, 11.3) pour l'air à évacuer (AL) débouche sur la chambre de refoulement (14) dans la région d'entrée de la chambre de refoulement (14).

4. Dispositif selon la revendication 3,
dans lequel le canal d'air (11.1, 11.2, 11.3) comporte une barrière d'écoulement (9.2, 10.2) pour le fluide à transporter.

5. Dispositif selon l'une des revendications 1 à 4, dans lequel il est prévu un insert (15) pour agrandir le volume de la chambre de refoulement (14).

6. Dispositif selon l'une des revendications 1 à 5, dans lequel la soupape d'admission (1.1) et/ou la soupape de décharge (1.3) sont conçues comme des soupapes à pincement actionnables avec de l'air comprimé.

7. Dispositif selon l'une des revendications 1 à 6, dans lequel le canal d'aspiration (20) de l'injecteur (1.4) est relié à la chambre de refoulement (14) dans la région de sortie de la chambre de refoulement (14).

8. Dispositif selon l'une des revendications 1 à 7, dans lequel le canal d'aspiration (20) de l'injecteur (1.4) rencontre la chambre de refoulement (14) en un angle aigu (α).

9. Dispositif selon l'une des revendications 1 à 8, dans lequel l'injecteur (1.4) comporte une buse d'expulsion (17) alimentée en air de buse d'expulsion (TL) par un raccord (17).

10. Dispositif selon l'une des revendications 1 à 9, dans lequel les raccords de commande de la soupape d'admission et de la soupape de décharge (5.1, 23.1), le raccord (30) pour l'air de dosage (DL), le raccord (17) pour l'air de buse d'expulsion (TL) et le raccord (11.1) pour l'air à évacuer (AL) sont agencés du côté frontal (6, 26) du dispositif pour le transport d'un fluide.

11. Dispositif selon l'une des revendications 1 à 9, avec un clapet anti-retour (46) relié au canal d'air de dosage (30).

12. Système pour le transport d'un fluide à l'aide du dispositif selon l'une des revendications 1 à 11,
- avec une soupape de commande pour l'air de dosage (45),
- avec une soupape de commande pour l'air à évacuer (42),
- avec une soupape de commande pour l'air de buse d'expulsion (48), et
- avec une commande (90) pour commander la soupape d'admission (1.1), la soupape de décharge (1.3) et les soupapes de commande (45, 42, 48).

13. Procédé pour la mise en oeuvre du dispositif selon l'une des revendications 1 à 12,
- dans lequel, au cours d'une phase, la soupape d'admission (1.1) est ouverte, la soupape de décharge (1.3) est fermée et l'injecteur (1.4) est alimenté en air de buse d'expulsion (TL), et
- dans lequel, au cours d'une autre phase, la soupape d'admission (1.1) est fermée, la soupape de décharge (1.3) est ouverte et l'air à évacuer (AL) est soufflé dans la chambre de refoulement (14).

14. Procédé selon l'une des revendications 1 à 13, dans lequel la commande (90) permet de maintenir constant le volume d'air total, incluant l'air à évacuer (AL), l'air de buse d'expulsion (TL) et l'air de dosage (DL).

15. Mise en oeuvre du dispositif pour le transport d'un fluide selon l'une des revendications 1 à 14, pour le transport d'une poudre de revêtement.
